# EUROPÄISCHE PATENTSCHRIFT

(11) **EP 4 374 957 B1**
(45) Veröffentlichungstag und Bekanntmachung des Hinweises auf die Patenterteilung: **27.05.2026**
(21) Anmeldenummer: 22209668.7
(22) Anmeldetag: 25.11.2022
(51) Int. Cl.: B01J 4/00, B01J 8/00, B01J 8/02, B01J 19/24

(54) **REAKTOR UND HERSTELLUNGSVERFAHREN DAFÜR**
REACTOR AND MANUFACTURING METHOD THEREFOR
RÉACTEUR ET SON PROCÉDÉ DE FABRICATION

(43) Veröffentlichungstag der Anmeldung: 29.05.2024
(73) Patentinhaber: L'AIR LIQUIDE, SOCIETE ANONYME POUR L'ETUDE ET L'EXPLOITATION DES PROCEDES GEORGES CLAUDE, 75007 Paris (FR)
(72) Erfinder: Oelmann, Tobias, 60439 Frankfurt (DE); Strozyk, Michael, 60439 Frankfurt (DE); May, Wolfgang, 60439 Frankfurt (DE); Schuhmann, Timm, 64625 Bensheim (DE)
(74) Vertreter: Schwenderling, Jens

(56) Entgegenhaltungen:
- WO-A1-02/098789
- WO-A1-2005/009608
- DE-A1- 102013 109 209
- US-A- 3 460 924
- US-A- 3 607 130
- US-A- 4 091 836

## Beschreibung

Die Erfindung betrifft einen Reaktor und ein Verfahren zur Herstellung eines solchen. Der Reaktor kann insbesondere für die Methanolsynthese genutzt werden.

Für Anwendungen wie die Methanolsynthese sind sogenannte Kissenplattenreaktoren bekannt. In diesen kann eine chemische Reaktion unter Kühlung durchgeführt werden. Dazu weisen Kissenplattenreaktoren ein Plattenpaket von Kissenplatten auf, welche von einem Kühlmedium durchströmt werden. Zwischen den Kissenplatten kann ein Katalysator angeordnet sein, an welchem ein Reaktionsgas entlang geleitet werden kann. Dadurch kann das Reaktionsgas umgesetzt werden. Währenddessen kann das Reaktionsgas durch das Kühlmedium gekühlt werden, welches innerhalb der Kissenplatten strömt. Das Kühlmedium kann über einen Verteiler in die Kissenplatten eingeleitet werden und über einen Sammler aus den Kissenplatten ausgeleitet werden. Der Verteiler und der Sammler sind üblicherweise über Zuleitungen beziehungsweise Ableitungen in einen Kühlkreislauf eingebunden. Aus der WO 2005/0090608 sind Reaktoren für Partialoxidationen mit Thermoblechplattenmodulen bekannt.

Im Betrieb können sich Komponenten eines Kissenplattenreaktors teilweise erheblich ausdehnen. Nicht alle Komponenten haben den gleichen Ausdehnungskoeffizienten und nicht alle Komponenten sind der gleichen Temperatur ausgesetzt. Daher dehnen sich die einzelnen Komponenten eines Kissenplattenreaktors üblicherweise unterschiedlich stark aus. Das kann zu Spannungen und letztlich auch zu Schäden führen. Insbesondere kann sich der Reaktormantel eines Kissenplattenreaktors anders ausdehnen als das Plattenpaket. Das kann zu erheblichen Spannungen in Leitungen führen, über welche das Kühlmedium zu den Kissenplatten und von den Kissenplatten weg geleitet wird. Beispiele für Rohrleitungen für Reformergase für Brennkammern, die unterschiedliche Wärmeausdehnungen ausgleichen können, sind aus den Offenlegungsschriften DE 10 2013 109 209 A1 und der WO 02/098789 A1 bekannt.

Aufgrund der zu berücksichtigenden Drücke ist eine flexible Lösung mittels eines flexiblen Schlauchs nicht oder nur unter großem Aufwand möglich.

Die beschriebenen Probleme treten auch bei Reaktoren auf, die zwar einem Kissenplattenreaktor ähneln, aber je nach Definition des Begriffs Kissenplattenreaktor nicht als solche betrachtet werden können.

Aufgabe der vorliegenden Erfindung ist es, die Auswirkungen thermischer Ausdehnung bei einem Reaktor auf einfache Weise zu reduzieren.

Diese Aufgaben werden gelöst mit einem Reaktor und einem Verfahren gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird ein Reaktor vorgestellt. Der in dem Anspruch 1 definierte Reaktor umfasst einen Reaktorbehälter. Weiterhin umfasst der Reaktor die folgenden Elemente, die jeweils innerhalb des Reaktorbehälters angeordnet sind:
- ein stehend gelagertes Plattenpaket, welches durch mehrere für ein Kühlfluid durchströmbare Kühlplatten gebildet ist, wobei zwischen den Kühlplatten Zwischenräume gebildet sind, in welchen ein Katalysator angeordnet ist, so dass ein Reaktionsgas die Zwischenräume durchströmen und dabei mit dem Katalysator in Kontakt gelangen kann,
- einen an einer Unterseite des Plattenpakets an das Plattenpaket angebundenen Verteiler,
- mindestens eine Zuleitung, über welche der Verteiler mit einem jeweiligen Kühlfluideinlass des Reaktorbehälters verbunden ist,
- einen an einer Oberseite des Plattenpakets an das Plattenpaket angebundenen Sammler, und
- mindestens eine Ableitung, über welche der Sammler mit einem jeweiligen Kühlfluidauslass des Reaktorbehälters verbunden ist.

Strömungspfade für das Kühlfluid sind gebildet, welche jeweils von einem der Kühlfluideinlässe durch die entsprechende Zuleitung, den Verteiler, eine der Kühlplatten, den Sammler und eine der Ableitungen zu dem entsprechenden Kühlfluidauslass führen, wobei die mindestens eine Ableitung derart gekrümmt ist, dass die Ableitung eine Achse des Reaktorbehälters um mindestens 180° umläuft.

Unter einem Reaktor ist eine Vorrichtung zu verstehen, welche zur Durchführung einer chemischen Reaktion eingerichtet ist. Der beschriebene Reaktor ist vorzugsweise zur Methanolsynthese eingerichtet. Allerdings kommt es für die nachfolgend beschriebene Funktionsweise und Vorteile des Reaktors nicht darauf an, für welche chemische Reaktion der Reaktor tatsächlich eingerichtet ist und genutzt wird. Der beschriebene Reaktor kann für eine Vielzahl denkbarer chemischer Reaktionen genutzt werden, an welcher ein Reaktionsgas mit einem Katalysator unter Kühlung umgesetzt wird.

Der Reaktor umfasst einen Reaktorbehälter. Der Reaktorbehälter ist vorzugsweise als ein Druckbehälter ausgebildet. Der Reaktorbehälter umfasst vorzugsweise einen Reaktormantel, welcher auch als Druckmantel bezeichnet werden kann. Innerhalb des Reaktorbehälters kann ein Reaktionsgas unter Druck chemisch umgesetzt werden. Beispielsweise kann das Reaktionsgas über einen Reaktionsgaseinlass in einen Innenraum des Reaktorbehälters eingeleitet werden, im Innenraum des Reaktorbehälters chemisch umgesetzt werden und durch einen Reaktionsgasauslass aus dem Reaktorbehälter ausgelassen werden. Aufgrund der innerhalb des Reaktorbehälters ablaufenden chemischen Reaktion hat das Reaktionsgas am Reaktionsgasauslass im Allgemeinen eine andere chemische Zusammensetzung als am Reaktionsgaseinlass. Im Falle der Methanolsynthese ist das Reaktionsgas vorzugsweise ein Synthesegas, welches einerseits aus Kohlenmonoxid und/oder Kohlendioxid und andererseits aus Wasserstoff gebildet ist.

Innerhalb des Reaktorbehälters ist ein Katalysator angeordnet. Der Katalysator kann die chemische Reaktion einleiten und/oder beschleunigen. Das Reaktionsgas kann innerhalb des Reaktorbehälters an dem Katalysator vorbeigeleitet werden. Durch die Wahl des Katalysatormaterials kann der Reaktor für eine bestimmte chemische Reaktion eingerichtet werden. Im Falle der Methanolsynthese ist der Katalysator vorzugsweise ein Kupfer-Zink-Katalysator.

Innerhalb des Reaktorbehälters kann das Reaktionsgas gekühlt werden, insbesondere während die chemische Reaktion abläuft. Das ist insbesondere im Falle einer exothermen chemischen Reaktion sinnvoll. Die Kühlung kann über ein Plattenpaket erreicht werden, welches durch mehrere Kühlplatten gebildet ist. Die Kühlplatten sind vorzugsweise parallel zueinander und derart beabstandet voneinander angeordnet, dass sich zwischen den Kühlplatten Zwischenräume bilden. Der Katalysator ist vorzugsweise innerhalb dieser Zwischenräume angeordnet. So kann das Reaktionsgas durch die Zwischenräume zwischen den Kühlplatten strömen und dort mit dem Katalysator in Kontakt gebracht werden.

Die Kühlung über die Kühlplatten ist möglich, indem die Kühlplatten von einem Kühlfluid durchströmt werden. Das Kühlfluid kann flüssig oder gasförmig sein. Vorzugsweise wird das Kühlfluid in flüssigem Zustand bereitgestellt und bei der Kühlung verdampft. Das Kühlfluid ist vorzugsweise H₂O. Durch die Verwendung des chemischen Zeichens H₂O soll verdeutlicht werden, dass das Kühlfluid auch gasförmig vorliegen kann. Das Kühlfluid kann also Wasser oder Wasserdampf sein. Im Falle von H₂O als Kühlfluid kann das Kühlfluid auch als Kesselspeisewasser bezeichnet werden, wenn es in den Reaktor eingeleitet wird. Beim Austritt aus dem Reaktor kann das Kühlfluid als Dampf vorliegen. Für die beschriebene Funktion der Kühlung kommt es allerdings im Allgemeinen weder auf die die chemische Zusammensetzung noch auf den Aggregatzustand des Kühlfluids an.

Die für das Kühlfluid durchströmbaren Kühlplatten weisen jeweils mindestens einen Kühlkanal auf, innerhalb dessen das Kühlfluid die Kühlplatten durchströmen kann. Der Kühlkanal kann mehrere Abzweige haben. Beispielsweise können die Kühlplatten jeweils dadurch gebildet sein, dass zwei Bleche an mehreren Verbindungspunkten miteinander verbunden sind, beispielsweise durch Schweißpunkte. Die Verbindungspunkte sind vorzugsweise über die Oberfläche der Kühlplatte verteilt angeordnet, insbesondere in regelmäßigen Abständen, so dass die Verbindungspunkte ein Gitternetz ergeben. Zwischen den Verbindungspunkten kann das Kühlfluid zwischen den Blechen strömen. Um dies zu erleichtern, können die Bleche derart gebogen sein, dass nur an den Verbindungspunkten Kontakt zwischen den Blechen besteht. Außerhalb der Verbindungspunkte ist der mindestens eine Kühlkanal zwischen den Blechen gebildet.

Die wie beschriebenen ausgebildeten Kühlplatten können auch als Kissenplatten (engl. "pillow plate") bezeichnet werden. Der beschriebene Reaktor kann entsprechend als Kissenplattenreaktor (engl. "pillow plate reactor") bezeichnet werden. Allerdings kann es dahinstehen, was genau unter die Definition einer Kissenplatte beziehungsweise eines Kissenplattenreaktors fällt. Hierin ist der Reaktor unabhängig von diesen Begrifflichkeiten der Sache nach durch die explizit angegebenen Merkmale definiert.

Das Plattenpaket ist stehend gelagert. Bei einer stehenden Lagerung ist das Plattenpaket an einer Unterseite des Plattenpakets gelagert. Beispielsweise kann das Plattenpaket an der Unterseite auf Trägern aufgestellt sein. Da das Plattenpaket stehend gelagert ist, erfolgt die thermische Ausdehnung des Plattenpakets nach oben.

Gegenstück zu der beschriebenen stehenden Lagerung des Plattenpakets ist eine hängende Lagerung. Dass das Plattenpaket des beschriebenen Reaktors als stehend gelagert beschrieben ist, bedeutet daher insbesondere, dass das Plattenpaket des beschriebenen Reaktors nicht hängend gelagert ist. Bei einer hängenden Lagerung ist das Plattenpaket an einer Oberseite des Plattenpakets gelagert. Beispielsweise könnte ein Plattenpaket hängend gelagert sein, indem das Plattenpaket an der Oberseite über eine Halterung mit dem Reaktorbehälter verbunden ist, insbesondere über Bratzen. Bei einem hängend gelagerten Plattenpaket würde die thermische Ausdehnung des Plattenpakets nach unten erfolgen.

Die stehende Lagerung ist insbesondere bei geringer Dampfproduktionsrate gegenüber der hängenden Lagerung von Vorteil. Darüber hinaus ermöglicht die stehende Lagerung eine optimale Ausnutzung des Verhältnisses von Katalysatorraum zu Behälterraum, da bei stehender Lagerung eine mechanische Unterstützung von unten gegeben ist.

Nachfolgend werden die Elemente des Reaktors beschrieben, über welche das Kühlfluid in die Kühlplatten eingeleitet und aus diesen ausgeleitet werden kann.

An einer Unterseite des Plattenpakets ist ein Verteiler an das Plattenpaket angebunden. Über mindestens eine Zuleitung ist der Verteiler mit einem jeweiligen Kühlfluideinlass des Reaktorbehälters verbunden. Das Kühlfluid kann also in einen der Kühlfluideinlässe eingeleitet werden, durch die entsprechende Zuleitung zum Verteiler geleitet werden und über den Verteiler auf die Kühlplatten verteilt werden. Der Verteiler ist dazu an die Kühlkanäle der Kühlplatten angebunden. Innerhalb des Verteilers ist das Kühlfluid vorzugsweise flüssig, insbesondere flüssiges Wasser.

Der Reaktor kann eine oder mehrere Zuleitungen haben. Im Falle einer einzigen Zuleitung verbindet die Zuleitung den einzigen Kühlfluideinlass mit dem Verteiler. Im Falle mehrerer Zuleitungen verbindet jede der Zuleitungen jeweils einen Kühlmitteleinlass mit dem Verteiler. Pro Zuleitung hat der Reaktor genau einen Kühlfluideinlass.

An einer Oberseite des Plattenpakets ist ein Sammler an das Plattenpaket angebunden. Über mindestens eine Ableitung ist der Sammler mit einem jeweiligen Kühlfluidauslass des Reaktorbehälters verbunden. Das Kühlfluid kann also über den Sammler aus den Kühlplatten gesammelt werden, durch eine der Ableitungen zu dem entsprechenden Kühlfluidauslass geleitet werden und durch diesen ausgelassen werden. Der Sammler ist dazu an die Kühlkanäle der Kühlplatten angebunden. Die Funktion des Sammlers ist also gegenläufig zur Funktion des Verteilers. Innerhalb des Sammlers ist das Kühlfluid vorzugsweise gasförmig, insbesondere Wasserdampf. Der Sammler kann daher auch als Dampfsammler bezeichnet werden.

Der Reaktor kann eine oder mehrere Ableitungen haben. Im Falle einer einzigen Ableitung verbindet die Ableitung den einzigen Kühlfluidauslass mit dem Sammler. Im Falle mehrerer Ableitungen verbindet jede der Ableitungen jeweils einen Kühlmittelauslass mit dem Sammler. Pro Ableitung hat der Reaktor genau einen Kühlfluidauslass.

Dass der Verteiler an der Unterseite des Plattenpakets angeordnet ist und der Sammler an der Oberseite, bezieht sich auf die bestimmungsgemäße Orientierung des Reaktors.

Über den Kühlfluideinlass beziehungsweise über die Kühlfluideinlässe kann das Kühlfluid von außerhalb des Reaktorbehälters in die entsprechende Zuleitung eingeleitet werden. Das Kühlfluid kann also an dem Kühlfluideinlass beziehungsweise an den Kühlfluideinlässen einen Reaktormantel durchtreten. Über den Kühlfluidauslass beziehungsweise über die Kühlfluidauslässe kann das Kühlfluid aus der entsprechenden Ableitung aus dem Reaktorbehälter herausgeleitet werden. Das Kühlfluid kann also an dem Kühlfluidauslass beziehungsweise an den Kühlfluidauslässen den Reaktormantel durchtreten. Allerdings gelangt das Kühlfluid nur insoweit in den Innenraum des Reaktorbehälters, als dass das Kühlfluid in die Zuleitung(en), den Verteiler, die Kühlplatten, den Sammler und die Ableitung(en) gelangt. Das Kühlfluid kommt nicht mit dem Reaktionsgas innerhalb des Reaktorbehälters in Kontakt. Es kommt lediglich zwischen dem Reaktionsgas und dem Kühlfluid zu einem Wärmetausch nach Art eines Wärmetauschers, insbesondere im Bereich der Kühlplatten.

Es sind also Strömungspfade für das Kühlfluid gebildet, welche jeweils von einem der Kühlfluideinlässe durch die entsprechende Zuleitung, den Verteiler, eine der Kühlplatten, den Sammler und eine der Ableitungen zu dem entsprechenden Kühlfluidauslass führen. Im Falle einer einzigen Zuleitung führen alle Strömungspfade gemeinsam von dem einen Kühlfluideinlass durch die Zuleitung zum Verteiler. Im Falle mehrerer Zuleitungen führt jeder der Strömungspfade von einem der Kühlfluideinlässe durch die entsprechende Zuleitung zum Verteiler. In jedem Fall teilen sich die Strömungspfade in dem Verteiler auf die Kühlplatten auf. Jeder Strömungspfad führt durch genau eine der Kühlplatten. Im Sammler werden die Strömungspfade gesammelt. Im Falle einer einzigen Ableitung führen alle Strömungspfade gemeinsam vom Sammler zu dem einen Kühlfluidauslass. Im Falle mehrerer Ableitungen führt jeder der Strömungspfade vom Sammler zu dem entsprechenden Kühlfluidauslass.

Außerhalb des Reaktorbehälters kann das Kühlfluid aus dem Kühlfluidauslass beziehungsweise aus den Kühlfluidauslässen entnommen und gekühlt werden. Anschließend kann das Kühlfluid erneut in den Kühlfluideinlass beziehungsweise in einen der Kühlfluideinlässe eingeleitet werden. Auf diese Weise kann ein Kühlkreislauf gebildet sein. Die Strömungspfade führen dann außerhalb des Reaktorbehälters von dem mindestens einen Kühlfluidauslass zu dem mindestens einen Kühlfluideinlass, so dass die Strömungspfade geschlossen sind. Im Falle eines Kühlkreislaufs kann das Kühlfluid daher ganz oder teilweise wiederverwendet werden. Das ist aber nicht erforderlich. Denkbar ist auch, dass immer frisches Kühlfluid in den mindestens einen Kühlfluideinlass eingeleitet wird und dass das aus dem mindestens einen Kühlfluidauslass entnommene Kühlfluid entsorgt wird.

Das Kühlfluid kann außerhalb des Reaktorbehälters mit einer Kühlvorrichtung gekühlt werden. Die Kühlvorrichtung ist vorzugsweise als eine Dampftrommel ausgebildet. Die Kühlvorrichtung muss nicht Teil des beschriebenen Reaktors sein. Es ist allerdings bevorzugt, dass der Reaktor eine Kühlvorrichtung zum Kühlen des Kühlfluids aufweist, welche außerhalb des Reaktorbehälters angeordnet ist und welche einerseits mit dem Kühlfluideinlass beziehungsweise mit den Kühlfluideinlässen verbunden ist und andererseits mit dem Kühlfluidauslass beziehungsweise mit den Kühlfluidauslässen verbunden ist. Diese Kühlvorrichtung ist in die Strömungspfade eingebunden. Alternativ zur Verwendung einer gesonderten Kühlvorrichtung kann das Kühlfluid beispielsweise auch außerhalb des Reaktorbehälters an der Umgebungsluft gekühlt werden.

Das Kühlfluid kann ohne Pumpe im Kühlkreislauf zirkuliert werden. Das ist insbesondere im Falle von Wasser als Kühlmedium möglich, weil der Dichteunterschied zwischen flüssigem und gasförmigem Wasserdampf eine natürliche Zirkulation erzeugt. Dieser Naturumlauf beruht auf dem Thermosyphon-Effekt. Denkbar ist aber auch, dass der Kühlkreislauf eine Pumpe aufweist, insbesondere außerhalb des Reaktors.

Alle Elemente des Reaktors, welche mit dem Katalysator in Kontakt gelangen können, sind vorzugsweise aus Stahl gebildet, insbesondere aus Edelstahl. So kann verhindert werden, dass der Katalysator das Material dieser Elemente angreift. Elemente, die mit dem Reaktorbehälter in Kontakt stehen, sind hingegen vorzugsweise aus einer Chrom-Molybdän-Legierung gebildet. Besonders bevorzugt ist korrosionsbeständiger Stahl, weil so Eisenoxid als katalysiertes Nebenprodukt vermieden werden kann.

Die Kühlplatten sind vorzugsweise aus Stahl gebildet, vorzugsweise aus Edelstahl.

Der Sammler ist vorzugsweise aus Stahl gebildet, insbesondere aus Edelstahl. Die Ableitung ist vorzugsweise aus einer Chrom-Molybdän-Legierung und/oder aus Stahl, insbesondere Edelstahl, gebildet. Beispielsweise kann ein an den Sammler angebundener Abschnitt der Ableitung aus Stahl gebildet sein, während der übrige Teil der Ableitung aus einer Chrom-Molybdän-Legierung gebildet ist. So kann den beiden zuvor beschriebenen Anforderungen an das Material Rechnung getragen werden. Der an den Sammler angebundene Abschnitt aus Stahl ist vorzugsweise als ein gerades Rohrstück ausgebildet, welches insbesondere parallel zu der Achse des Reaktorbehälters orientiert ist. Es hat sich herausgestellt, dass ein derartig gewählter Ort des Materialübergangs zwischen dem Stahl und der Chrom-Molybdän-Legierung besonders vorteilhaft in Bezug auf die Flexibilität der Ableitung ist. Um die Auswirkung der thermischen Ausdehnung möglichst klein zu halten, sollte der Bereich der unterschiedlichen Materialien über die Höhe des Reaktorbehälters so klein wie möglich gehalten werden. Des Weiteren sollte die Materialtrennung damit nicht nur vorzugsweise so nah wie möglich am Plattenpaket, sondern vorzugsweise auch im Bereich eines geraden Rohrstücks platziert sein. So kann der Spannungszustand optimiert werden. Eine Materialtrennung in einem geraden Rohrstück ist vorteilhaft, weil in einem geraden Rohrstück im Vergleich zu einem gekrümmten Rohrstück ein einfacherer Spannungszustand vorliegt. Dies gilt insbesondere für ein parallel zur Achse des Reaktorbehälters ausgebildetes gerades Rohrstück, weil in einem solchen Rohrstück primär axiale Kräfte anstelle von Scherkräften wirken, insbesondere im Vergleich zu einem Rohrstück, welches senkrecht zur Achse des Reaktorbehälters angeordnet ist.

Der Verteiler ist vorzugsweise aus Stahl gebildet, insbesondere aus Edelstahl. Die Zuleitung ist vorzugsweise aus einer Chrom-Molybdän-Legierung und/oder aus Stahl, insbesondere Edelstahl, gebildet. Beispielsweise kann ein an den Verteiler angebundener Abschnitt der Zuleitung aus Stahl gebildet sein, während der übrige Teil der Zuleitung aus einer Chrom-Molybdän-Legierung gebildet ist. So kann den beiden zuvor beschriebenen Anforderungen an das Material Rechnung getragen werden. Der an den Verteiler angebundene Abschnitt aus Stahl ist vorzugsweise als ein gerades Rohrstück ausgebildet, welches insbesondere parallel zu der Achse des Reaktorbehälters orientiert ist. Es hat sich herausgestellt, dass ein derartig gewählter Ort des Materialübergangs zwischen dem Stahl und der Chrom-Molybdän-Legierung besonders vorteilhaft in Bezug auf die Flexibilität der Zuleitung ist. Dies gilt insbesondere, wenn der Materialübergang nah am Plattenpaket gewählt ist.

Die Ableitung hat vorzugsweise einen Durchmesser im Bereich von 2 bis 25 cm, insbesondere im Bereich von 4 bis 15 cm. Die Zuleitung hat vorzugsweise einen Durchmesser im Bereich von 2 bis 25 cm, insbesondere im Bereich von 4 bis 15 cm.

Bei dem beschriebenen Reaktor sind die Auswirkungen thermischer Ausdehnung besonders gering. Das wird dadurch erreicht, dass die mindestens eine Ableitung derart gekrümmt ist, dass die Ableitung eine Achse des Reaktorbehälters um mindestens 180° umläuft, vorzugsweise um mindestens 270°, besonders bevorzugt um mindestens 360°. Besonders bevorzugt ist die mindestens eine Ableitung derart gekrümmt, dass die Ableitung die Achse des Reaktorbehälters um 360° bis 1080° umläuft. Das bedeutet, dass die Ableitung die Achse des Reaktorbehälters einmal vollständig bis dreimal vollständig umläuft.

Im Falle einer einzigen Ableitung ist diese Ableitung derart gekrümmt, dass die Ableitung die Achse des Reaktorbehälters um mindestens 180° umläuft. Im Falle mehrerer Ableitungen sind die Ableitungen jeweils derart gekrümmt, dass jede der Ableitungen die Achse des Reaktorbehälters um mindestens 180° umläuft. Im Falle mehrere Ableitungen sind diese jeweils vorzugsweise entsprechend der hierin beschriebenen bevorzugten Ausgestaltungen der einen Ableitung ausgebildet.

Die Achse des Reaktorbehälters erstreckt sich in einer Hochrichtung. Der Sammler, das Plattenpaket und der Verteiler sind auf der Achse des Reaktorbehälters angeordnet.

Dass die Ableitung die Achse des Reaktorbehälters vollständig umläuft, bedeutet, dass die Ableitung bei Projektion auf eine Ebene senkrecht zur Achse des Reaktorbehälters die Achse des Reaktorbehälters vollständig, d.h. zu allen Seiten, einschließt. Umläuft die Ableitung die Achse des Reaktorbehälters nur um 180 bis 360°, gilt eine entsprechende Definition. In dem Fall schließt die Ableitung die Achse des Reaktorbehälters bei Projektion auf eine Ebene senkrecht zur Achse des Reaktorbehälters nicht vollständig ein. Im Fall von 180° schließt die Ableitung die Achse des Reaktorbehälters bei Projektion auf eine Ebene senkrecht zur Achse des Reaktorbehälters nur halb ein.

Die Ableitung muss die Achse des Reaktorbehälters nicht im konstanten Abstand umlaufen. In einer bevorzugten Ausführungsform ist die Ableitung zwar ringförmig oder spiralförmig. Dies ist aber nicht erforderlich. Insbesondere kann die Ableitung auch gerade Abschnitte aufweisen.

Sowohl bei einer ringförmigen als auch bei einer spiralförmigen Ausgestaltung der Ableitung kann sich in einer Projektion auf eine Ebene senkrecht zur Achse des Reaktorbehälters eine Kreisform ergeben. Das ist der Fall, wenn die Achse des Reaktorbehälters mit einer Achse der ringförmigen oder spiralförmigen Ableitung zusammenfällt. Dies ist bevorzugt.

Dass die Ableitung eine Achse des Reaktorbehälters um mindestens 180° umläuft, sagt nichts darüber aus, wie die Ableitung in Höhenrichtung verläuft. Anfang und Ende der Ableitung können auf der gleichen Höhe sein oder in der Hochrichtung voneinander beabstandet sein. Zwischen Anfang und Ende kann die Ableitung - jedenfalls soweit die hier betrachtete Definition betroffen ist - beliebig steigen, fallen oder auf konstanter Höhe verlaufen.

Dass die Ableitung eine Achse des Reaktorbehälters um mindestens 180°, vorzugsweise um mindestens 270°, besonders bevorzugt um 360° umläuft, kann alternativ auch dadurch ausgedrückt werden, dass
- sich bei Betrachtung in einer Projektion auf eine Ebene senkrecht zu einer Achse des Reaktorbehälters eine Orientierung der Ableitung im Verlauf der Ableitung um mindestens 180°, vorzugsweise um mindestens 270°, besonders bevorzugt um 360° verändert, oder
- die Ableitung bei Betrachtung in einer Projektion auf eine Ebene senkrecht zu einer Achse des Reaktorbehälters die Achse des Reaktorbehälters um mindestens 180°, vorzugsweise um mindestens 270°, besonders bevorzugt um 360° umläuft, oder
- die Ableitung bei Betrachtung in einer Projektion auf eine Ebene senkrecht zu einer Achse des Reaktorbehälters die Achse des Reaktorbehälters zu mindestens 180°, vorzugsweise um mindestens 270°, besonders bevorzugt um 360° einschließt.

Die zuvor beschriebenen bevorzugten Ausgestaltungen der Ableitung gelten entsprechend auch für diese alternativen Formulierungen.

Unabhängig von der gewählten Formulierung sind die Auswirkungen thermischer Ausdehnung aufgrund der beschriebenen Ausgestaltung der Ableitung besonders gering. Derartige thermische Ausdehnungen können insbesondere bewirken, dass sich Anfang und Ende der Ableitung in Höhenrichtung relativ zueinander verschieben.

Durch die umlaufende Ausgestaltung der Ableitung wird diese Höhenänderung auf eine vergleichsweise große Länge der Ableitung verteilt und hat so eine vergleichsweise geringe Auswirkung auf die Ableitung. Insbesondere können so die durch die thermische Ausdehnung verursachten Kräfte besonders gut verteilt werden. Dem liegt die Erkenntnis zugrunde, dass eine Länge der Ableitung bei der beschriebenen umlaufenden Ausgestaltung der Ableitung länger ist als insbesondere bei einer direkten geradlinigen Verbindung zwischen Sammler und Kühlfluidauslass. Dies kann insbesondere anhand einer spiralförmigen Ableitung veranschaulicht werden, wobei eine Spiralachse mit der Achse des Reaktorbehälters zusammenfällt. Entfernen sich Anfang und Ende einer solchen spiralförmigen Ableitung entlang der Achse der Spirale beziehungsweise des Reaktorbehälters voneinander, werden die einzelnen Wicklungen der Spirale nur vergleichsweise wenig auseinandergezogen. Für die beschriebene Funktionsweise kommt es allerdings nicht darauf an, dass die Ableitung genau spiralförmig ist. Die gleiche Funktion wird auf analoge Weise auch erfüllt, wenn die Ableitung eine beliebige Form hat, welche die beschriebene Definition erfüllt. Insbesondere beeinträchtigen gerade Abschnitte der Ableitung die beschriebene Funktionsweise nicht oder nur in geringem Ausmaß.

Es hat sich herausgestellt, dass die beschriebenen Vorteile in sinnvollem Umfang bereits erzielt werden, wenn die Ableitung die Achse des Reaktorbehälters um 180° umläuft. Dabei wird Flexibilität sowohl in horizontaler als auch in vertikaler Richtung erreicht. Je mehr die Ableitung die Achse des Reaktorbehälters umläuft, umso größer kann eine Länge der Ableitung sein. Daher werden die beschriebenen Vorteile umso mehr erreicht, je mehr die Ableitung die Achse des Reaktorbehälters umläuft. Daher ist es bevorzugt, dass die Ableitung die Achse des Reaktorbehälters um mindestens 270° umläuft, insbesondere sogar um mindestens 360°.

Durch die beschriebene Ausgestaltung der Ableitung können die Auswirkungen thermischer Ausdehnungen besonders einfach reduziert werden. Das gilt insbesondere im Vergleich zu flexiblen Lösungen mit einem flexiblen Schlauch. Die beschriebene Ableitung kann als Rohrleitung ausgebildet sein. Entsprechend kann die Ableitung ohne Weiteres auch hohen Drücken standhalten, was beispielsweise bei einem Schlauch nicht der Fall wäre. Vorzugsweise ist die Ableitung dazu ausgelegt, einem Druck von mindestens 100 bar standhalten zu können.

In einer bevorzugten Ausführungsform des Reaktors ist die mindestens eine Ableitung mit mehreren geraden Rohrstücken und mindestens einem gekrümmten Rohrstück gebildet.

Wie zuvor beschrieben, kann auch mit einer solchen Ausgestaltung eine besonders geringe Auswirkung thermischer Ausdehnung erreicht werden. Eine Ausgestaltung mit mehreren geraden Rohrstücken und mindestens einem gekrümmten Rohrstück bietet darüber hinaus den Vorteil, besonders einfach hergestellt werden zu können. Das gilt insbesondere im Vergleich zu einer spiralförmigen Ableitung. Eine solche kann am einfachsten in einem einzigen Biegevorgang hergestellt werden. Dieser muss allerdings sehr präzise durchgeführt werden, damit bei der fertiggestellten Ableitung Anfang und Ende der Ableitung genau die gewünschte relative Anordnung zueinander haben.

Die Ableitung der vorliegenden Ausführungsform hingegen kann hergestellt werden, indem die Rohrstücke aneinandergehalten und miteinander verbunden werden, insbesondere miteinander verschweißt oder aneinander geflanscht werden. Dies kann als ein mehrstufiger Prozess durchgeführt werden, durch welchen die Ableitung schrittweise erhalten wird. In jedem Schritt kann eine neue Justierung vorgenommen werden. Dadurch kann eine Ungenauigkeit in vorhergehenden Schritten wieder ausgeglichen werden.

Darüber hinaus ist es vorteilhaft, wenn die einzelnen Rohrstücke Normteile sind. Derartige Rohrstücke sind besonders leicht verfügbar und günstig.

Die gekrümmten Rohrstücke können insbesondere eine Ellenbogen-Form haben. Ein solches Rohrstück hat die Form eines Ringsegments. Das gekrümmte Rohrstück ist vorzugsweise um 30 bis 180° gekrümmt, insbesondere um 90°. Ein um 90° gekrümmtes Rohrstück hat die Form eines Viertel-Rings. Insbesondere derartige Rohrstücke sind als Normteile verfügbar.

In einer weiteren bevorzugten Ausführungsform weist der Reaktor mehrere der Ableitungen auf, wobei durch jede der Ableitungen jeweils nur ein Teil der Strömungspfade verläuft.

Zuvor wurde beschrieben, dass der Reaktor mindestens eine Ableitung umfasst, über welche der Sammler mit einem jeweiligen Kühlfluidauslass des Reaktorbehälters verbunden ist. In der vorliegenden Ausführungsform ist das der Fall, indem der Reaktor mindestens zwei dieser Ableitungen umfasst. Besonders bevorzugt sind genau zwei der Ableitungen vorgesehen.

Durch jede der Ableitungen verläuft jeweils nur ein Teil der Strömungspfade. Das Kühlfluid durchläuft also auf dem Weg vom Sammler zu einem der Kühlfluidauslässe immer genau eine Ableitung, nicht jedoch mehrere der Ableitungen nacheinander.

Die Ableitungen sind so dimensioniert, dass Vorgaben zu Volumenstrom und Strömungsgeschwindigkeit des Kühlfluids durch die Ableitungen eingehalten werden können. Diese Vorgaben können insbesondere so gewählt sein, dass das Kühlfluid ohne Pumpe im Kühlkreislauf zirkuliert werden kann. Aus diesen Vorgaben ergibt sich, welchen Leitungsquerschnitt alle Ableitungen zusammen haben müssen. Sind mindestens zwei Ableitungen vorgesehen, ist dieser Gesamt-Leitungsquerschnitt auf mehrere Ableitungen verteilt. Für die einzelnen Ableitungen genügt daher ein vergleichsweise geringer Leitungsquerschnitt. Dies ist vorteilhaft, weil ein großer Leitungsquerschnitt im Allgemeinen eine entsprechend große Wanddicke der Ableitung erfordert, um die gewünschte Druckbeständigkeit zu erreichen. Eine Ableitung mit großer Wanddicke ist allerdings weniger flexibel als eine Ableitung mit geringerer Wanddicke. Durch die Aufteilung auf mindestens zwei Ableitungen können die Ableitungen daher besonders flexibel sein, was weiter dazu beiträgt, thermische Ausdehnungen besonders gut kompensieren zu können.

Die Ableitungen sind vorzugsweise symmetrisch zueinander ausgebildet. So kann eine besonders gleichmäßige Strömung erzielt werden.

In einer weiteren bevorzugten Ausführungsform des Reaktors sind die mindestens zwei Ableitungen gleichsinnig gekrümmt und versetzt zueinander an dem Sammler angebunden.

In dieser Ausführungsform sind die mindestens zwei Ableitungen besonders platzsparend angeordnet.

In einer weiteren bevorzugten Ausführungsform des Reaktors ist der mindestens eine Kühlfluidauslass nach oben von dem Sammler beabstandet angeordnet.

Dass die Ableitung eine Achse des Reaktorbehälters um mindestens 180° umläuft, sagt nichts über den Verlauf der Ableitung in der Hochrichtung aus. Anfang und Ende der Ableitung können insoweit auf der gleichen Höhe sein oder in der Hochrichtung voneinander beabstandet sein. In der vorliegenden Ausführungsform ist dies nun darauf beschränkt, dass Anfang und Ende der Ableitung in der Hochrichtung voneinander beabstandet sind. Es hat sich herausgestellt, dass dadurch die Auswirkungen thermischer Ausdehnung noch weiter reduziert werden können. Sind Anfang und Ende der Ableitung in der Höhenrichtung voneinander beabstandet, kann leichter eine große Länge der Ableitung erreicht werden, als wenn Anfang und Ende der Ableitung auf der gleichen Höhe wären.

In einer weiteren bevorzugten Ausführungsform des Reaktors lässt die mindestens eine Ableitung einen Freiraum um die Achse des Reaktorbehälters frei.

Durch den Freiraum ist das Plattenpaket besonders leicht zugänglich. Durch den Freiraum kann insbesondere der Katalysator zwischen den Kühlplatten besonders einfach eingefüllt, entleert oder ausgetauscht werden.

In einer weiteren bevorzugten Ausführungsform des Reaktors ist die mindestens eine Zuleitung derart gekrümmt, dass sich bei Betrachtung in einer Projektion auf eine die Achse des Reaktorbehälters enthaltende Ebene in einem ersten Abschnitt der Zuleitung eine Orientierung der Zuleitung im Verlauf der Zuleitung um mindestens 135° verändert, vorzugsweise um mindestens 150°, und sich in einem an den ersten Abschnitt in Richtung auf den Verteiler anschließenden zweiten Abschnitt der Zuleitung eine Orientierung der Zuleitung im Verlauf der Zuleitung um mindestens 45°, vorzugsweise um mindestens 60°, verändert, wobei die mindestens eine Zuleitung im ersten Abschnitt gegensinnig zum zweiten Abschnitt gekrümmt ist.

Bei der vorliegenden Ausführungsform sind die Auswirkungen thermischer Ausdehnung besonders gering. Das wird dadurch erreicht, dass die Zuleitung wie beschrieben gekrümmt ist. Besonders bevorzugt ist, dass die Zuleitung zunächst horizontal verläuft, anschließend im ersten Abschnitt um 180° gekrümmt ist, anschließend im zweiten Abschnitt gegensinnig zum ersten Abschnitt um 90° gekrümmt ist und anschließend vertikal nach oben verläuft. Die Zuleitung liegt dabei vorzugsweise in einer Ebene. Allerdings können Vorteile auch erzielt werden, wenn der Verlauf der Zuleitung von diesem Idealfall abweicht. Es hat sich herausgestellt, dass vorteilhafte Ergebnisse insbesondere dann bereits erzielt werden können, wenn die Zuleitung ihre Orientierung im ersten Abschnitt um mindestens 45° verändert, insbesondere um 60 bis 110°, und im zweiten Abschnitt um mindestens 135°, insbesondere um 150 bis 210°.

Im Falle einer einzigen Zuleitung ist diese Zuleitung wie beschrieben gekrümmt. Im Falle mehrerer Zuleitungen sind die Zuleitungen jeweils wie beschrieben gekrümmt.

Die Achse des Reaktorbehälters erstreckt sich in einer Hochrichtung. Der Sammler, das Plattenpaket und der Verteiler sind vorzugsweise auf der Achse des Reaktorbehälters angeordnet.

Die beschriebene Krümmung bezieht sich auf eine Projektion auf eine die Achse des Reaktorbehälters enthaltende Ebene. Damit ist nichts darüber gesagt, wie die Zuleitung außerhalb dieser Ebene verläuft. Anfang und Ende der Zuleitung können in Bezug auf diese Ebene versetzt zueinander angeordnet sein. Allerdings ist es der Einfachheit halber bevorzugt, dass die Zuleitung eben ausgebildet ist. Insbesondere ist es bevorzugt, dass die Zuleitung innerhalb einer die Achse des Reaktorbehälters enthaltenden Ebene ausgebildet ist. Bei dieser Definition wird die Ausdehnung des Querschnitts der Zuleitung außer Acht gelassen.

Die Zuleitung muss nicht mit konstantem Krümmungsradius gekrümmt sein. In einer bevorzugten Ausführungsform ist dies zwar im ersten Abschnitt und/oder im zweiten Abschnitt jeweils der Fall. Insbesondere kann die Zuleitung aber auch im ersten Abschnitt und/oder im zweiten Abschnitt teilweise gerade ausgebildet sein.

Dass die mindestens eine Zuleitung derart gekrümmt ist, dass sich bei Betrachtung in einer Projektion auf eine die Achse des Reaktorbehälters enthaltende Ebene in einem ersten Abschnitt der Zuleitung eine Orientierung der Zuleitung im Verlauf der Zuleitung um mindestens 135°, vorzugsweise um mindestens 150°, verändert, und sich in einem an den ersten Abschnitt in Richtung auf den Verteiler anschließenden zweiten Abschnitt der Zuleitung eine Orientierung der Zuleitung im Verlauf der Zuleitung um mindestens 45°, vorzugsweise um mindestens 60°, verändert, wobei die mindestens eine Zuleitung im ersten Abschnitt gegensinnig zum zweiten Abschnitt gekrümmt ist, kann alternativ auch dadurch ausgedrückt werden, dass
- die mindestens eine Zuleitung in einem ersten Abschnitt in Bezug auf eine erste Krümmungsachse um mindestens 135°, vorzugsweise um mindestens 150°, gekrümmt ist und in einem an den ersten Abschnitt in Richtung auf den Verteiler anschließenden zweiten Abschnitt in Bezug auf eine zweite Krümmungsachse um mindestens 45°, vorzugsweise um mindestens 60°, gegensinnig zum ersten Abschnitt gekrümmt ist, wobei die erste Krümmungsachse und die zweite Krümmungsachse jeweils senkrecht zu einer die Achse des Reaktorbehälters enthaltenden Ebene stehen, oder
- die mindestens eine Zuleitung derart gekrümmt ist, dass die Zuleitung in einem ersten Abschnitt eine erste Achse um mindestens 135°, vorzugsweise um mindestens 150°, umläuft und in einem an den ersten Abschnitt in Richtung auf den Verteiler anschließenden zweiten Abschnitt eine zweite Achse um mindestens 45°, vorzugsweise um mindestens 60°, gegensinnig zum ersten Abschnitt umläuft, wobei die erste Achse und die zweite Achse jeweils senkrecht zu einer die Achse des Reaktorbehälters enthaltenden Ebene stehen.

Die beschriebenen bevorzugten Ausgestaltungen gelten entsprechend auch für diese alternativen Formulierungen.

Durch die beschriebene Ausgestaltung der mindestens einen Zuleitung sind die Auswirkungen thermischer Ausdehnung besonders gering. Derartige thermische Ausdehnungen können insbesondere bewirken, dass sich Anfang und Ende der Zuleitung in Höhenrichtung relativ zueinander verschieben. Durch die beschriebene Ausgestaltung der Zuleitung wird diese Höhenänderung auf eine vergleichsweise große Länge der Zuleitung verteilt und hat so eine vergleichsweise geringe Auswirkung auf die Zuleitung. Insbesondere können so die durch die thermische Ausdehnung verursachten Kräfte besonders gut verteilt werden. Dem liegt die Erkenntnis zugrunde, dass eine Länge der Zuleitung bei der beschriebenen Ausgestaltung der Zuleitung länger ist als insbesondere bei einer direkten geradlinigen Verbindung zwischen Verteiler und Kühlfluideinlass. Dies liegt insbesondere an der gegensinnigen Krümmung im ersten und zweiten Abschnitt der Zuleitung.

Es hat sich herausgestellt, dass die beschriebenen Vorteile in sinnvollem Umfang bereits erzielt werden, wenn sich bei Betrachtung in einer Projektion auf eine die Achse des Reaktorbehälters enthaltende Ebene in dem ersten Abschnitt der Zuleitung eine Orientierung der Zuleitung im Verlauf der Zuleitung um mindestens 135° verändert und sich im zweiten Abschnitt der Zuleitung eine Orientierung der Zuleitung im Verlauf der Zuleitung um mindestens 45° verändert. Da die Krümmung in den beiden Abschnitten gegensinnig ist, ist die Zuleitung durch die beiden Abschnitte zusammen um 90° gebogen. Gegenüber eine einfachen 90°-Biegung hat die beschriebene Zuleitung aber eine schlaufenartige Form. Durch diese ist die Länge der Zuleitung vergleichsweise groß. Dadurch kann die thermische Ausdehnung besonders gut kompensiert werden.

Je mehr die Zuleitung von der Form einer einfachen 90°-Biegung abweicht, umso größer kann eine Länge der Zuleitung sein. Daher werden die beschriebenen Vorteile umso mehr erreicht, je mehr die Zuleitung im ersten Abschnitt um im zweiten Abschnitt ihre Orientierung ändert. Daher ist es bevorzugt, dass sich bei Betrachtung in einer Projektion auf eine die Achse des Reaktorbehälters enthaltende Ebene in dem ersten Abschnitt der Zuleitung eine Orientierung der Zuleitung im Verlauf der Zuleitung um mindestens 150° verändert und sich im zweiten Abschnitt der Zuleitung eine Orientierung der Zuleitung im Verlauf der Zuleitung um mindestens 60° verändert. Auch bei einer Kombination der Werte 150° und 60° ist die Zuleitung durch die beiden Abschnitte zusammen um 90° gebogen. Dies ist auch allgemein bevorzugt. So kann die Zuleitung ohne weitere Krümmung auf kürzestem Weg senkrecht zur Mantelwand des Reaktorbehälters geführt werden. Zudem kann die Zuleitung dadurch senkrecht auf den Verteilter treffen. Dies erleichtert die Anbindung der Zuleitung an den Verteiler. Außerdem kann die Zuleitung so mit einem geraden Rohrstück an den Verteiler angebunden sein. In diesem geraden Rohrstück kann eine Materialtrennung angeordnet sein. Dies ist in Bezug auf den Spannungszustand vorteilhaft, weil in einem parallel zur Achse des Reaktorbehälters stehenden Rohrstück primär axiale Kräfte anstelle von Scherkräften wirken, insbesondere im Vergleich zu einem Rohrstück, welches senkrecht zur Achse des Reaktorbehälters angeordnet ist.

Eine solche Ausgestaltung vereinfacht auch die weitere Gestaltung der Zuleitung. Es ist also bevorzugt, dass sich bei Betrachtung in einer Projektion auf eine die Achse des Reaktorbehälters enthaltende Ebene in dem ersten Abschnitt der Zuleitung eine Orientierung der Zuleitung im Verlauf der Zuleitung um einen ersten Winkel verändert und sich im zweiten Abschnitt der Zuleitung eine Orientierung der Zuleitung im Verlauf der Zuleitung um einen zweiten Winkel verändert, wobei der erste Winkel um 60° bis 120°, insbesondere um 90°, größer ist als der zweite Winkel. Der erste Winkel beträgt mindestens 135°, insbesondere mindestens 150°. Der zweite Winkel beträgt mindestens 45°, insbesondere mindestens 60°.

Durch die beschriebene Ausgestaltung der Zuleitung können die Auswirkungen thermischer Ausdehnungen besonders einfach reduziert werden. Das gilt insbesondere im Vergleich zu flexiblen Lösungen mit einem flexiblen Schlauch. Die beschriebene Zuleitung kann als Rohrleitung ausgebildet sein. Entsprechend kann die Zuleitung ohne Weiteres auch hohen Drücken standhalten, was beispielsweise bei einem Schlauch nicht der Fall wäre. Vorzugsweise ist die Zuleitung dazu ausgelegt, einem Druck von mindestens 100 bar standhalten zu können.

In der vorliegenden Ausführungsform kann die Auswirkung thermischer Ausdehnung einerseits durch die beschriebene Ausgestaltung der Ableitung im oberen Bereich des Reaktorbehälters besonders gut ausgeglichen werden und andererseits durch die beschriebene Ausgestaltung der Zuleitung im unteren Bereich des Reaktorbehälters. Ersteres ist besonders bei der vorliegend betrachteten stehenden Ausgestaltung vorteilhaft, weil sich das Plattenpaket dabei nach oben thermisch ausdehnt. Im unteren Bereich des Reaktorbehälters kommt der thermischen Ausdehnung also eine geringere Bedeutung zu. Nichtsdestotrotz ist es auch bei der stehenden Ausgestaltung sinnvoll, dieser wenn auch geringeren thermischen Ausdehnung Rechnung zu tragen. In der vorliegenden Ausführungsform kann dies durch die beschriebene Ausgestaltung der Zuleitung erfolgen.

Im ersten Abschnitt muss die Zuleitung nicht durchgehend gebogen sein, solange die zuvor angegebene Definition erfüllt ist, dass sich in dem ersten Abschnitt der Zuleitung eine Orientierung der Zuleitung im Verlauf der Zuleitung um mindestens 135°, vorzugsweise um mindestens 150°, verändert. Der erste Abschnitt kann auch einen geraden Teilabschnitt haben. Im zweiten Abschnitt muss die Zuleitung nicht durchgehend gebogen sein, solange die zuvor angegebene Definition erfüllt ist, dass sich in dem zweiten Abschnitt der Zuleitung eine Orientierung der Zuleitung im Verlauf der Zuleitung um mindestens 45°, vorzugsweise um mindestens 60°, verändert. Der zweite Abschnitt kann auch einen geraden Teilabschnitt haben. Insbesondere ist es möglich, dass der erste Abschnitt und/oder der zweite Abschnitt an einem Übergang zwischen dem ersten Abschnitt und dem zweiten Abschnitt einen geraden Bereich ausbildet.

In einer weiteren bevorzugten Ausführungsform des Reaktors ist die mindestens eine Zuleitung mit mindestens einem geraden Rohrstück und mehreren gekrümmten Rohrstücken gebildet.

Die Zuleitung könnte durch einen einzigen Biegevorgang gebildet werden. Dieser müsste allerdings sehr präzise durchgeführt werden, damit bei der fertiggestellten Zuleitung Anfang und Ende der Zuleitung genau die gewünschte relative Anordnung zueinander haben. Deutlich einfacher ist es, die Zuleitung aus mehreren Rohrstücken zusammenzusetzen. Durch die Verwendung mindestens eines geraden Rohrstücks und mehrerer gekrümmter Rohrstücke kann dabei die gewünschte Ausgestaltung der Zuleitung erhalten werden.

Die Zuleitung der vorliegenden Ausführungsform kann hergestellt werden, indem die Rohrstücke aneinandergehalten und miteinander verbunden werden, insbesondere miteinander verschweißt oder aneinander geflanscht werden. Dies kann als ein mehrstufiger Prozess durchgeführt werden, durch welchen die Zuleitung schrittweise erhalten wird. In jedem Schritt kann eine neue Justierung vorgenommen werden. Dadurch kann eine Ungenauigkeit in vorhergehenden Schritten wieder ausgeglichen werden.

Darüber hinaus ist es vorteilhaft, wenn die einzelnen Rohrstücke Normteile sind. Derartige Rohrstücke sind besonders leicht verfügbar und günstig.

Die gekrümmten Rohrstücke können insbesondere eine Ellenbogen-Form haben. Ein solches Rohrstück hat die Form eines Ringsegments. Das gekrümmte Rohrstück ist vorzugsweise um 30 bis 180° gekrümmt, insbesondere um 90°. Ein um 90° gekrümmtes Rohrstück hat die Form eines Viertel-Rings. Insbesondere derartige Rohrstücke sind als Normteile verfügbar.

In einer weiteren bevorzugten Ausführungsform des Reaktors ist genau eine der Zuleitungen vorgesehen, wobei alle Strömungspfade durch die eine Zuleitung verlaufen.

Zuvor wurde beschrieben, dass der Reaktor mindestens eine Zuleitung umfasst, über welche der Verteiler mit einem jeweiligen Kühlfluideinlass des Reaktorbehälters verbunden ist. In der vorliegenden Ausführungsform ist das der Fall, indem der Reaktor genau eine solche Zuleitung hat. Durch diese eine Zuleitung verläuft jeder der Strömungspfade. Das Kühlfluid durchläuft also auf dem Weg vom Kühlfluideinlass zum Verteiler immer diese eine Zuleitung.

Die Zuleitung ist so dimensioniert, dass Vorgaben zu Volumenstrom und Strömungsgeschwindigkeit des Kühlfluids durch die Zuleitung eingehalten werden können. Diese Vorgaben können insbesondere so gewählt sein, dass das Kühlfluid ohne Pumpe im Kühlkreislauf zirkuliert werden kann. Aus diesen Vorgaben ergibt sich, welchen Leitungsquerschnitt die Zuleitung haben muss. Es hat sich herausgestellt, dass dies mit einer einzigen Zuleitung bereits erfüllt werden kann.

Die Anforderungen an die Zuleitung(en) und an die Ableitung(en) unterscheiden sich. Das gilt insbesondere dann, wenn das Kühlfluid im flüssigen Zustand durch die Zuleitung(en) strömt und im gasförmigen Zustand durch die Ableitung(en). Das Kühlfluid hat im gasförmigen Zustand eine geringere Dichte als im flüssigen Zustand. Es kann daher genügen, eine Zuleitung zu haben, auch wenn zwei Ableitungen sinnvoll sind. Es ist daher bevorzugt, dass es genau eine Zuleitung und mindestens zwei Ableitungen gibt.

In einer weiteren bevorzugten Ausführungsform des Reaktors ist der mindestens eine Kühlfluideinlass nach unten von dem Verteiler beabstandet angeordnet.

Durch die beschriebene Krümmung der Zuleitung kann ein derartiger Abstand zwischen Kühlfluideinlass und Verteiler besonders gut überbrückt werden. Wären Verteiler und Kühlfluideinlass auf der gleichen Höhe, müsste die Zuleitung über die beschriebene Krümmung im ersten und zweiten Abschnitt hinaus einen oder mehrere weitere gekrümmte Abschnitte haben, um den Verteiler mit dem Kühlfluideinlass zu verbinden. Das ist zwar möglich, aber nicht bevorzugt.

Sind die Ableitung und die Zuleitung wie beschrieben ausgebildet, können die Vorteile gleichermaßen mit der stehenden und der hängenden Lagerung des Plattenpakets erzielt werden. Es ist daher nicht erforderlich, den beschriebenen Reaktor auf die stehende Lagerung einzuschränken, wenn sowohl Ableitung als auch Zuleitung wie beschriebene ausgebildet sind. Als ein weiterer Aspekt der Erfindung wird daher ein Reaktor vorgestellt, welcher einen Reaktorbehälter umfasst und welcher innerhalb des Reaktorbehälters umfasst:
- ein Plattenpaket, welches durch mehrere für ein Kühlfluid durchströmbare Kühlplatten gebildet ist, wobei zwischen den Kühlplatten Zwischenräume gebildet sind, in welchen ein Katalysator angeordnet ist, so dass ein Reaktionsgas die Zwischenräume durchströmen und dabei mit dem Katalysator in Kontakt gelangen kann,
- einen an einer Unterseite des Plattenpakets an das Plattenpaket angebundenen Verteiler,
- mindestens eine Zuleitung, über welche der Verteiler mit einem jeweiligen Kühlfluideinlass des Reaktorbehälters verbunden ist,
- einen an einer Oberseite des Plattenpakets an das Plattenpaket angebundenen Sammler,
- mindestens eine Ableitung, über welche der Sammler mit einem jeweiligen Kühlfluidauslass des Reaktorbehälters verbunden ist,

Strömungspfade für das Kühlfluid sind gebildet, welche jeweils von einem der Kühlfluideinlässe durch die entsprechende Zuleitung, den Verteiler, eine der Kühlplatten, den Sammler und eine der Ableitungen zu dem entsprechenden Kühlfluidauslass führen, und wobei die mindestens eine Ableitung derart gekrümmt ist, dass die Ableitung eine Achse des Reaktorbehälters um mindestens 180° umläuft, und wobei die mindestens eine Zuleitung derart gekrümmt ist, dass sich bei Betrachtung in einer Projektion auf eine die Achse des Reaktorbehälters enthaltende Ebene in einem ersten Abschnitt der Zuleitung eine Orientierung der Zuleitung im Verlauf der Zuleitung um mindestens 135°, vorzugsweise um mindestens 150°, verändert, und sich in einem an den ersten Abschnitt in Richtung auf den Verteiler anschließenden zweiten Abschnitt der Zuleitung eine Orientierung der Zuleitung im Verlauf der Zuleitung um mindestens 45°, vorzugsweise um mindestens 60°, verändert, und wobei die mindestens eine Zuleitung im ersten Abschnitt gegensinnig zum zweiten Abschnitt gekrümmt ist.

Die beschriebenen Vorteile und Merkmale des zuvor beschriebenen Reaktors sind auf den vorliegend beschriebenen Reaktor anwendbar und übertragbar, und umgekehrt. Bei dem vorliegend beschriebenen Reaktor kann das Plattenpaket stehend oder hängend gelagert sein. Auch eine andere Art der Lagerung ist dabei denkbar.

Als ein weiterer Aspekt der Erfindung wird ein Verfahren zum Herstellen eines wie beschrieben ausgebildeten Reaktors vorgestellt. Das Verfahren umfasst
a) Bereitstellen des Reaktorbehälters, des Plattenpakets, des Verteilers, der mindestens einen Zuleitung, des Sammlers und der mindestens einen Ableitung,
b) Montieren des Reaktorbehälters, des Plattenpakets, des Verteilers, der mindestens einen Zuleitung, des Sammlers und der mindestens einen Ableitung zu dem Reaktor,
wobei die mindestens eine Ableitung in Schritt a) durch folgenden Unterschritt bereitgestellt wird:
a1) Herstellen der mindestens einen Ableitung, indem mehrere Rohrstücke aneinandergehalten und miteinander verbunden werden, insbesondere miteinander verschweißt oder aneinander geflanscht werden.

Die beschriebenen Vorteile und Merkmale des Reaktors sind auf das Verfahren anwendbar und übertragbar, und umgekehrt. Der Reaktor ist vorzugsweise durch das beschriebene Verfahren hergestellt.

Besonders bevorzugt ist bei dem Verfahren, dass die mindestens eine Ableitung mit mehreren geraden Rohrstücken und mindestens einem gekrümmten Rohrstück gebildet ist. Insbesondere in dem Fall können Normteile als Rohrstücke verwendet werden. Allerdings kommt es für das beschriebene Verfahren nicht auf die Form der Rohrstücke an.

In Schritt a1) kann die Ableitung schrittweise erhalten werden. Das bezieht sich insbesondere darauf, dass die Rohrstücke sequentiell miteinander verbunden werden, insbesondere miteinander verschweißt oder aneinander geflanscht werden. Das Aneinanderhalten kann ebenfalls sequentiell erfolgen. Es wird also immer ein weiteres Rohrstück an den bereits hergestellten Teil der Ableitung gehalten und mit dem bereits hergestellten Teil der Ableitung verbunden, insbesondere miteinander verschweißt oder aneinander geflanscht. Möglich ist aber auch, mehrere oder sogar alle Rohrstücke aneinanderzuhalten und erst anschließend miteinander zu verschweißen. Dabei kommt es nicht darauf an, in welcher Reihenfolge die einzelnen Schweißverbindungen ausgebildet werden. Das Aneinanderhalten kann manuell oder mithilfe von Haltevorrichtungen erfolgen. Das Aneinanderhalten kann dadurch unterstützt werden, dass benachbarte Rohrstücke vorläufig durch einzelne Schweißpunkte miteinander verbunden werden. Dies kann auch als Heften bezeichnet werden.

In einer bevorzugten Ausführungsform des Verfahrens wird die mindestens eine Zuleitung in Schritt a) durch folgenden Unterschritt bereitgestellt wird:
a2) Herstellen der mindestens einen Zuleitung, indem mehrere Rohrstücke aneinandergehalten und miteinander verbunden werden, insbesondere miteinander verschweißt oder aneinander geflanscht werden.

Für Schritt a2) gilt das zu Schritt a1) Gesagte entsprechend.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: einen erfindungsgemäßen Reaktors in einer seitlichen Schnittdarstellung,
- Fig. 2a bis 2d:: den Sammler und die Ableitungen des Reaktors aus Fig. 1 in vier verschiedenen Darstellungen,
- Fig. 3:: den Verteiler und die Zuleitung des Reaktors aus Fig. 1.

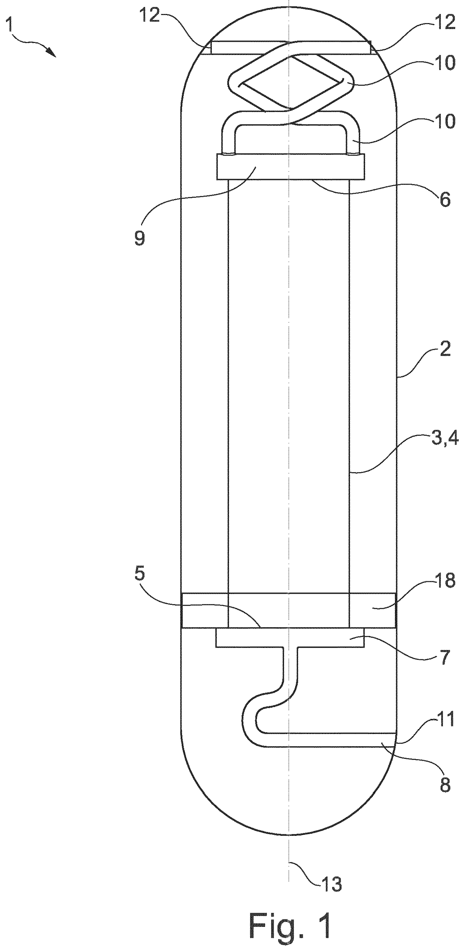

Fig. 1 zeigt einen Reaktor 1 mit einem Reaktorbehälter 2. Innerhalb des Reaktorbehälters 2 weist der Reaktor 1 ein stehend gelagertes Plattenpaket 3 auf. Die stehende Lagerung des Plattenpakets 3 ist durch Träger 18 an einer Unterseite 5 des Plattenpakets 3 angedeutet. Das Plattenpaket 3 ist durch mehrere Kühlplatten 4 gebildet. In Fig. 1 ist eine der Kühlplatten 4 zu erkennen. Die übrigen Kühlplatten 4 sind parallel dazu innerhalb der Zeichenebene angeordnet. Zwischen den Kühlplatten 4 sind Zwischenräume gebildet, in welchen ein Katalysator angeordnet ist, so dass ein Reaktionsgas die Zwischenräume durchströmen und dabei mit dem Katalysator in Kontakt gelangen kann. Das Reaktionsgas kann beispielsweise durch einen (nicht gezeigten) Einlass unterhalb des Plattenpakets 3 in den Reaktorbehälter 2 eingeleitet werden, die Zwischenräume von unten nach oben durchströmen und an einem (nicht gezeigten) Auslass oberhalb des Plattenpakets 3 aus dem Reaktorbehälter 2 herausgelassen werden. Während das Reaktionsgas die Zwischenräume zwischen den Kühlplatten 4 durchströmt, kann es durch die Kühlplatten gekühlt werden. Dazu sind die Kühlplatten 4 für ein Kühlfluid durchströmbar ausgebildet.

Damit das Kühlfluid durch die Kühlplatten 4 strömen kann, weist der Reaktor 1 folgende Elemente innerhalb des Reaktorbehälters 2 auf:
- einen an der Unterseite 5 des Plattenpakets 3 an das Plattenpaket 3 angebundenen Verteiler 7,
- eine Zuleitung 8, über welche der Verteiler 7 mit einem Kühlfluideinlass 11 des Reaktorbehälters 2 verbunden ist,
- einen an einer Oberseite 6 des Plattenpakets 3 an das Plattenpaket 3 angebundenen Sammler 9,
- zwei Ableitungen 10, über welche der Sammler 9 mit einem jeweiligen Kühlfluidauslass 12 des Reaktorbehälters 2 verbunden ist.

Dadurch sind Strömungspfade für das Kühlfluid gebildet, welche jeweils von dem Kühlfluideinlass 11 über die Zuleitung 8, den Verteiler 7, eine der Kühlplatten 4, den Sammler 9 und eine der Ableitungen 10 zu dem entsprechenden Kühlfluidauslass 12 führen. Durch jede der beiden Ableitungen 10 verläuft jeweils nur ein Teil der Strömungspfade. Die beiden Kühlfluidauslässe 12 sind jeweils nach oben von dem Sammler 9 beabstandet angeordnet.

Das Kühlfluid kann über diese Strömungspfade vom Kühlfluideinlass 11 zu einem der beiden Kühlfluidauslässe 12 durch den Innenraum des Reaktorbehälters 2 geleitet werden. Auf diesem Weg ist das Kühlfluid von dem übrigen Innenraum des Reaktorbehälters 2, in welchem das Reaktionsgas strömen kann, getrennt. Das Kühlfluid kommt also nicht mit dem Reaktionsgas in Kontakt. Es ist lediglich ein Wärmetausch zwischen dem Kühlfluid und dem Reaktionsgas möglich.

Weiterhin ist in Fig. 1 eine Achse 13 des Reaktorbehälters 2 eingezeichnet.

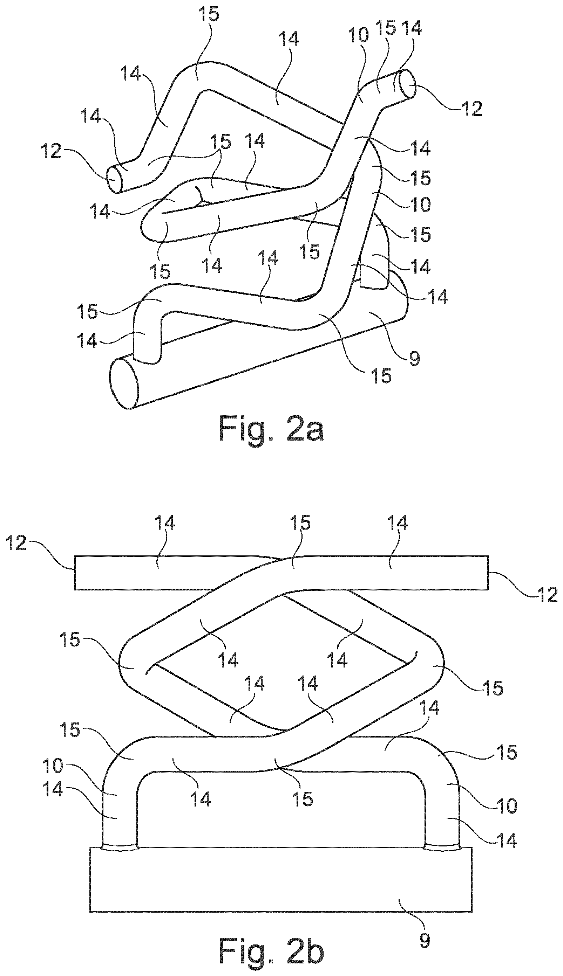

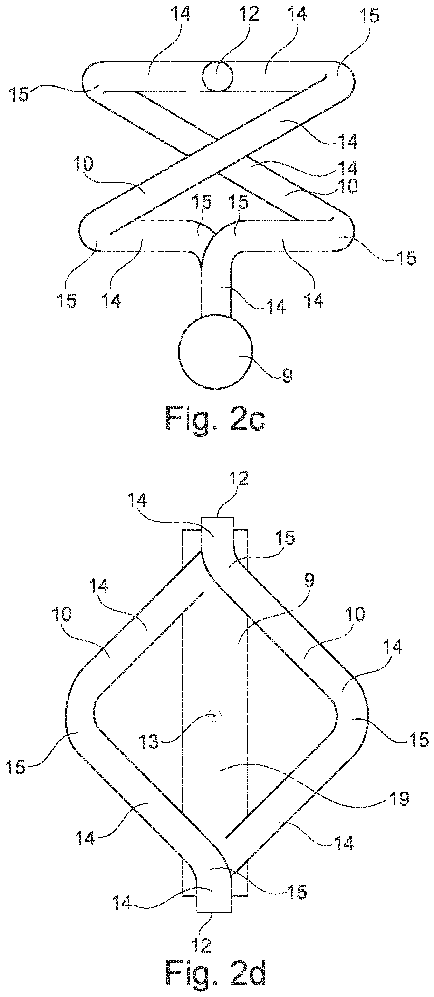

In Fig. 2a bis 2d sind der Sammler 9 und die beiden Ableitungen 10 des Reaktors 1 vergrößert gezeigt. Fig. 2a zeigt eine perspektivische Ansicht. Fig. 2b zeigt eine seitliche Ansicht aus der gleichen Perspektive wie Fig. 1. Fig. 2c zeigt eine dazu um 90° verdrehte seitliche Ansicht. Fig. 2d zeigt eine Draufsicht.

Zu erkennen ist an den Fig. 2a bis 2d, dass die beiden Ableitungen 10 jeweils derart gekrümmt sind, dass die Ableitungen 10 jeweils die Achse 13 des Reaktorbehälters 2 um 360° umlaufen. Dies ist insbesondere an der perspektivischen Darstellung der Fig. 2a zu erkennen sowie an der Draufsicht der Fig. 2d. Bei der in Fig. 2d gezeigten Betrachtung senkrecht zu der Achse 13 des Reaktorbehälters 2 ändert sich eine Orientierung der jeweiligen Ableitung 10 im Verlauf dieser Ableitung 10 um etwa 360°.

Zu erkennen ist an den Fig. 2a bis 2d auch, dass die beiden Ableitungen 10 jeweils mit mehreren geraden Rohrstücken 14 und mehreren gekrümmten Rohrstücken 15 gebildet sind. Die beiden Ableitungen 10 sind gleichsinnig gekrümmt und versetzt zueinander an dem Sammler 9 angebunden. Die beiden Ableitungen 10 können jeweils hergestellt werden, indem die Rohrstücke 14,15 aneinandergehalten und miteinander verbunden werden, insbesondere miteinander verschweißt oder aneinander geflanscht werden.

Insbesondere an der Draufsicht der Fig. 2d ist zu erkennen, dass die beiden Ableitungen 10 jeweils einen Freiraum 19 um die Achse 13 des Reaktorbehälters 2 freilassen.

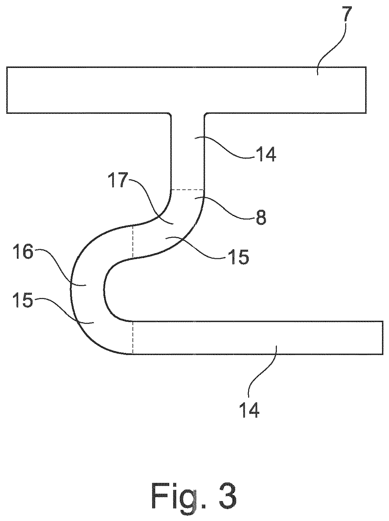

Fig. 3 zeigt eine seitliche Darstellung des Verteilers 7 und der Zuleitung 8 aus Fig. 1. Die Perspektive der Fig. 3 ist die gleiche wie bei Fig. 1. Der in Fig. 3 zu erkennende Verlauf der Zuleitung 8 entspricht dem Verlauf der Zuleitung 8 bei Betrachtung in einer Projektion auf eine die Achse 13 des Reaktorbehälters 2 enthaltende Ebene. Zu erkennen ist, dass die Zuleitung 8 derart gekrümmt ist, dass sich in einem ersten Abschnitt 16 der Zuleitung 8 eine Orientierung der Zuleitung 8 im Verlauf der Zuleitung 8 um 180° verändert, und sich in einem an den ersten Abschnitt 16 in Richtung auf den Verteiler 7 anschließenden zweiten Abschnitt 17 der Zuleitung 8 eine Orientierung der Zuleitung 8 im Verlauf der Zuleitung 8 um 90° verändert. Im ersten Abschnitt 16 ist die Zuleitung gegensinnig zum zweiten Abschnitt 17 gekrümmt ist. Die Erstreckung des ersten Abschnitts 16 und des zweiten Abschnitts 17 ist jeweils durch eine gestrichelte Linie angedeutet. Auch die Zuleitung 2 ist mit mehreren geraden Rohrstücken 14 und mehreren gekrümmten Rohrstücken 15 gebildet. Die Zuleitung 8 kann hergestellt werden, indem die Rohrstücke 14,15 aneinandergehalten und miteinander verbunden werden, insbesondere miteinander verschweißt oder aneinander geflanscht werden.

### Bezugszeichenliste

- 1: Reaktor
- 2: Reaktorbehälter
- 3: Plattenpaket
- 4: Kühlplatte
- 5: Unterseite
- 6: Oberseite
- 7: Verteiler
- 8: Zuleitung
- 9: Sammler
- 10: Ableitung
- 11: Kühlfluideinlass
- 12: Kühlfluidauslass
- 13: Achse
- 14: gerades Rohrstück
- 15: gekrümmtes Rohrstück
- 16: erster Abschnitt
- 17: zweiter Abschnitt
- 18: Träger
- 19: Freiraum

## Patentansprüche

1. Reaktor (1) umfassend einen Reaktorbehälter (2) sowie innerhalb des Reaktorbehälters (2):
- ein stehend gelagertes Plattenpaket (3), welches durch mehrere für ein Kühlfluid durchströmbare Kühlplatten (4) gebildet ist, wobei zwischen den Kühlplatten (4) Zwischenräume gebildet sind, in welchen ein Katalysator angeordnet ist, so dass ein Reaktionsgas die Zwischenräume durchströmen und dabei mit dem Katalysator in Kontakt gelangen kann,
- einen an einer Unterseite (5) des Plattenpakets (3) an das Plattenpaket (3) angebundenen Verteiler (7),
- mindestens eine Zuleitung (8), über welche der Verteiler (7) mit einem jeweiligen Kühlfluideinlass (11) des Reaktorbehälters (2) verbunden ist,
- einen an einer Oberseite (6) des Plattenpakets (3) an das Plattenpaket (3) angebundenen Sammler (9),
- mindestens eine Ableitung (10), über welche der Sammler (9) mit einem jeweiligen Kühlfluidauslass (12) des Reaktorbehälters (2) verbunden ist,
wobei Strömungspfade für das Kühlfluid gebildet sind, welche jeweils von einem der Kühlfluideinlässe (11) durch die entsprechende Zuleitung (8), den Verteiler (7), eine der Kühlplatten (4), den Sammler (9) und eine der Ableitungen (10) zu dem entsprechenden Kühlfluidauslass (12) führen, und wobei die mindestens eine Ableitung (10) derart gekrümmt ist, dass die Ableitung (10) eine Achse (13) des Reaktorbehälters (2) um mindestens 180° umläuft, wobei der Sammler (9), das Plattenpaket (3) und der Verteiler (7) auf der Achse (13) des Reaktorbehälters (2) angeordnet sind.

2. Reaktor (1) nach Anspruch 1, wobei die mindestens eine Ableitung (10) mit mehreren geraden Rohrstücken (14) und mindestens einem gekrümmten Rohrstück (15) gebildet ist.

3. Reaktor (1) nach einem der vorhergehenden Ansprüche, welcher mehrere der Ableitungen (10) aufweist, wobei durch jede der Ableitungen (10) jeweils nur ein Teil der Strömungspfade verläuft.

4. Reaktor (1) nach Anspruch 3, wobei die mindestens zwei Ableitungen (10) gleichsinnig gekrümmt sind und versetzt zueinander an dem Sammler (9) angebunden sind.

5. Reaktor (1) nach einem der vorhergehenden Ansprüche, wobei der mindestens eine Kühlfluidauslass (12) nach oben von dem Sammler (9) beabstandet angeordnet ist.

6. Reaktor (1) nach einem der vorhergehenden Ansprüche, wobei die mindestens eine Ableitung (10) einen Freiraum (19) um die Achse (13) des Reaktorbehälters (2) freilässt.

7. Reaktor (1) nach einem der vorhergehenden Ansprüche, wobei die mindestens eine Zuleitung (8) derart gekrümmt ist, dass sich bei Betrachtung in einer Projektion auf eine die Achse (13) des Reaktorbehälters (2) enthaltende Ebene in einem ersten Abschnitt (16) der Zuleitung (8) eine Orientierung der Zuleitung (8) im Verlauf der Zuleitung (8) um mindestens 135° verändert, und sich in einem an den ersten Abschnitt (16) in Richtung auf den Verteiler (7) anschließenden zweiten Abschnitt (17) der Zuleitung (8) eine Orientierung der Zuleitung (8) im Verlauf der Zuleitung (8) um mindestens 45° verändert, und wobei die mindestens eine Zuleitung (8) im ersten Abschnitt (16) gegensinnig zum zweiten Abschnitt (17) gekrümmt ist.

8. Verfahren zum Herstellen eines Reaktors (1) nach einem der vorhergehenden Ansprüche, umfassend
a) Bereitstellen des Reaktorbehälters (2), des Plattenpakets (3), des Verteilers (7), der mindestens einen Zuleitung (8), des Sammlers (9) und der mindestens einen Ableitung (10),
b) Montieren des Reaktorbehälters (2), des Plattenpakets (3), des Verteilers (7), der mindestens einen Zuleitung (8), des Sammlers (9) und der mindestens einen Ableitung (10) zu dem Reaktor (1),
wobei die mindestens eine Ableitung (10) in Schritt a) durch folgenden Unterschritt bereitgestellt wird:
a1) Herstellen der mindestens einen Ableitung (10), indem mehrere Rohrstücke (14,15) aneinandergehalten und miteinander verbunden werden.

9. Verfahren nach Anspruch 8, wobei die mindestens eine Zuleitung (8) in Schritt a) durch folgenden Unterschritt bereitgestellt wird:
a2) Herstellen der mindestens einen Zuleitung (8), indem mehrere Rohrstücke (14,15) aneinandergehalten und miteinander verbunden werden.

## Claims

1. Reactor (1) comprising a reactor vessel (2) and, inside the reactor vessel (2):
- a plate assembly (3) which is mounted upright and which is formed by a plurality of cooling plates (4) through which a cooling fluid can flow, wherein between the cooling plates (4) intermediate spaces, in which a catalyst is arranged, are formed such that a reaction gas can flow through the intermediate spaces and come into contact with the catalyst,
- a distributor (7) which is attached to the plate assembly (3) on an underside (5) of the plate assembly (3),
- at least one supply line (8), via which the distributor (7) is connected to a respective cooling fluid inlet (11) of the reactor vessel (2),
- a collector (9) which is attached to the plate assembly (3) on a top side (6) of the plate assembly (3),
- at least one discharge line (10), via which the collector (9) is connected to a respective cooling fluid outlet (12) of the reactor vessel (2),
wherein flow paths for the cooling fluid are formed, the flow paths in each case leading from one of the cooling fluid inlets (11) through the corresponding supply line (8), the distributor (7), one of the cooling plates (4), the collector (9) and one of the discharge lines (10) to the corresponding cooling fluid outlet (12), and wherein the at least one discharge line (10) is curved in such a way that the discharge line (10) runs around an axis (13) of the reactor vessel (2) by at least 180°, wherein the collector (9), the plate assembly (3) and the distributor (7) are arranged on the axis (13) of the reactor vessel (2).

2. Reactor (1) according to Claim 1, wherein the at least one discharge line (10) is formed with a plurality of rectilinear pipe pieces (14) and at least one curved pipe piece (15).

3. Reactor (1) according to either of the preceding claims, which has a plurality of the discharge lines (10), wherein in each case only a portion of the flow paths runs through each of the discharge lines (10).

4. Reactor (1) according to Claim 3, wherein the at least two discharge lines (10) are curved in the same direction and are attached offset from one another to the collector (9).

5. Reactor (1) according to any one of the preceding claims, wherein the at least one cooling fluid outlet (12) is arranged spaced apart upwards from the collector (9).

6. Reactor (1) according to any one of the preceding claims, wherein the at least one discharge line (10) leaves a clearance (19) free around the axis (13) of the reactor vessel (2).

7. Reactor (1) according to any one of the preceding claims, wherein the at least one supply line (8) is curved in such a manner that, when viewed in a projection onto a plane containing the axis (13) of the reactor vessel (2), an orientation of the supply line (8) in a first portion (16) of the supply line (8) changes over the course of the supply line (8) by at least 135°, and in a second portion (17) of the supply line (8), which adjoins the first portion (16) in the direction of the distributor (7), an orientation of the supply line (8) changes over the course of the supply line (8) by at least 45°, and wherein the at least one supply line (8) is curved in the first portion (16) in the opposite direction to the second portion (17).

8. Method for producing a reactor (1) according to any one of the preceding claims, comprising
a) providing the reactor vessel (2), the plate assembly (3), the distributor (7), the at least one supply line (8), the collector (9) and the at least one discharge line (10),
b) mounting the reactor vessel (2), the plate assembly (3), the distributor (7), the at least one supply line (8), the collector (9) and the at least one discharge line (10) for the reactor (1),
wherein the at least one discharge line (10) in step a) is provided by the following sub-step:
a1) producing the at least one discharge line (10) by holding a plurality of pipe pieces (14,15) together and connecting them to one another.

9. Method according to Claim 8, wherein the at least one supply line (8) in step a) is provided by the following sub-step:
a2) producing the at least one supply line (8) by holding a plurality of pipe pieces (14,15) together and connecting them to one another.

## Revendications

1. Réacteur (1) comportant une cuve de réacteur (2) et à l'intérieur de la cuve de réacteur (2) :
- un paquet de plaques (3) monté verticalement, formé de plusieurs plaques de refroidissement (4) pouvant être traversées par un fluide de refroidissement, des espaces intermédiaires étant formés entre les plaques de refroidissement (4), dans lesquels est disposé un catalyseur, de sorte qu'un gaz réactif peut traverser les espaces intermédiaires et entrer ainsi en contact avec le catalyseur,
- un distributeur (7) relié au paquet de plaques (3) sur un côté inférieur (5) du paquet de plaques (3),
- au moins une conduite d'alimentation (8) par l'intermédiaire de laquelle le distributeur (7) est relié à une entrée de fluide de refroidissement (11) respective de la cuve de réacteur (2),
- un collecteur (9) relié au paquet de plaques (3) sur un côté supérieur (6) du paquet de plaques (3),
- au moins une conduite d'évacuation (10) par laquelle le collecteur (9) est relié à une sortie de fluide de refroidissement respective (12) de la cuve de réacteur (2),
des chemins d'écoulement pour le fluide de refroidissement étant formés, qui mènent chacun depuis l'une des entrées de fluide de refroidissement (11) à travers la conduite d'alimentation correspondante (8), le distributeur (7), l'une des plaques de refroidissement (4), le collecteur (9) et l'une des conduite d'évacuations (10) jusqu'à la sortie de fluide de refroidissement correspondante (12), et l'au moins une conduite d'évacuation (10) étant courbée de telle sorte que la conduite d'évacuation (10) tourne d'au moins 180° un axe (13) de la cuve de réacteur (2), le collecteur (9), le paquet de plaques (3) et le distributeur (7) étant disposés sur l'axe (13) de la cuve de réacteur (2).

2. Réacteur (1) selon la revendication 1, dans lequel l'au moins une conduite d'évacuation (10) est formée de plusieurs tronçons de tuyau droits (14) et d'au moins un tronçon de tuyau courbé (15).

3. Réacteur (1) selon l'une quelconque des revendications précédentes, qui comporte plusieurs des conduite d'évacuations (10), seule une partie des chemins d'écoulement s'étendant à travers chacune des conduite d'évacuations (10).

4. Réacteur (1) selon la revendication 3, dans lequel les au moins deux conduite d'évacuations (10) sont courbées dans le même sens et sont reliées au collecteur (9) de manière décalée l'une par rapport à l'autre.

5. Réacteur (1) selon l'une quelconque des revendications précédentes, dans lequel l'au moins une sortie de fluide de refroidissement (12) est disposée à distance vers le haut du collecteur (9).

6. Réacteur (1) selon l'une quelconque des revendications précédentes, dans lequel l'au moins une conduite d'évacuation (10) laisse un espace libre (19) autour de l'axe (13) de la cuve de réacteur (2).

7. Réacteur (1) selon l'une quelconque des revendications précédentes, dans lequel l'au moins une conduite d'alimentation (8) est courbée de telle sorte que, lorsqu'on observe une projection sur un plan contenant l'axe (13) de la cuve de réacteur (2), dans une première section (16) de la conduite d'alimentation (8), une orientation de la conduite d'alimentation (8) est modifiée d'au moins 135° sur le trajet de la conduite d'alimentation (8), et dans une deuxième section (17) de la conduite d'alimentation (8) qui se raccorde à la première section (16) en direction du distributeur (7), une orientation de la conduite d'alimentation (8) est modifiée d'au moins 45° sur le trajet de la conduite d'alimentation (8), et l'au moins une conduite d'alimentation (8) est courbée dans la première section (16) dans le sens opposé à la deuxième section (17).

8. Procédé de fabrication d'un réacteur (1) selon l'une quelconque des revendications précédentes, comprenant
a) la fourniture de la cuve de réacteur (2), du paquet de plaques (3), du distributeur (7), de l'au moins une conduite d'alimentation (8), du collecteur (9) et de l'au moins une conduite d'évacuation (10),
b) le montage de la cuve de réacteur (2), du paquet de plaques (3), du distributeur (7), de l'au moins une conduite d'alimentation (8), du collecteur (9) et de l'au moins une conduite d'évacuation (10) pour former le réacteur (1),
l'au moins une conduite d'évacuation (10) étant fournie à l'étape a) par la sous-étape suivante :
a1) la fabrication de l'au moins une conduite d'évacuation (10) en maintenant plusieurs tronçons de tuyau (14, 15) les uns contre les autres et en les reliant entre eux.

9. Procédé selon la revendication 8, dans lequel l'au moins une conduite d'alimentation (8) est fournie à l'étape a) par la sous-étape suivante :
a2) la fabrication de l'au moins une conduite d'alimentation (8) en maintenant plusieurs tronçons de tuyau (14, 15) les uns contre les autres et en les reliant entre eux.
